# EUROPEAN PATENT APPLICATION

(11) **EP 3 780 498 A1**
(43) Date of publication of application: **17.02.2021**
(21) Application number: 19833250.4
(22) Date of filing: 10.04.2019
(51) Int. Cl.: H04L 12/24

(54) **NETWORK DEPLOYMENT METHOD AND APPARATUS**

(30) Priority: 09.07.2018 CN 201810747333
(71) Applicant: ZTE Corporation, Shenzhen, Guangdong 518057 (CN)
(72) Inventor: LIU, Zongchang, Shenzhen, Guangdong 518057 (CN); YAO, Xin, Shenzhen, Guangdong 518057 (CN); LIU, Daofeng, Shenzhen, Guangdong 518057 (CN)
(74) Representative: Betten & Resch
(86) International application number: PCT/CN2019/082109
(87) International publication number: WO 2020/010887

(57) **Abstract**

A network deployment method and apparatus, the method including: acquiring a network orchestration parameter, a dependency relation chain and a network topology, each protocol node in the dependency relation chain being preconfigured with a corresponding orchestration template configured to describe parameter information on which each protocol node depends; performing a network protocol orchestration according to the network orchestration parameter, the dependency relation chain and the network topology to generate network configuration information; and sending the network configuration information to a device. Through the present disclosure, the problems of high operation complexity and low fault tolerance rate of a network deployment mode provided in related technologies can be solved, and the operation complexity in the network deployment configuration process can be reduced by establishing the dependency relation chain, which is more conducive to the automatic deployment and rapid delivery of the basic network in large data center.

## Description

### TECHNICAL FIELD

The present disclosure relates to the field of Internet, and in particular to a network deployment method and apparatus.

### BACKGROUND

At present, construction of a data center is becoming more and more concentrated, the network scale is getting larger and larger, and data centers with tens of thousands or even over 100,000 devices are becoming more and more popular. Network deployment has gradually become a bottleneck problem in the rapid delivery of data centers. This problem is mainly manifested in the large scale of network, low efficiency and error-prone manual deployment, difficulty in troubleshooting, long delivery cycle and high cost of operation and maintenance. For this reason, a variety of automatic network deployment modes are proposed in related technologies.

Mode 1: Device configuration based on template. That is, a startup configuration template is created for a zero-configuration device in advance. After the initial configuration of the zero-configuration device is completed, the corresponding startup configuration template is searched according to the device type information and deployed to the zero-configuration device, and then the automatic configuration of the zero configuration device is completed by running the startup configuration template.

Mode 2: Device configuration based on topology. That is, according to saved configuration information of the device, a link layer discovery protocol (LLDP) message is sent and a network topology is collected. Secondly, the device is stacked based on the network topology to get a simplified network topology. Then, other protocols are continued to be configured for the device in the simplified network topology to complete the network configuration.

Mode 3: Device configuration based on identity. That is, device information and a neighbor relation of a current device are acquired, so as to identify the current device according to the device information and the neighbor relation of the current device, and then configure the current device according to the identified device identity.

Mode 4: Device configuration based on neighbors. That is, a device to be deployed acquires a preset description of the neighbors by accessing the neighbors to generate configuration information. Then, according to the configuration information, a corresponding preset configuration file is downloaded from a preset server, and the preset configuration file is automatically started running, thereby completing the configuration of the device to be deployed.

To sum up, although all the above modes can realize the automatic deployment of device, it is still in the stage of theoretical research. Therefore, there are still many problems in the preparation stage of automatic deployment, including but not limited to, how to automatically generate templates, how to automatically generate configuration files, and how to generate configuration information according to neighbors or identity identifications, that is, there lacks specific implementation solutions.

Not only that, although the above-mentioned automatic deployment can complete a rapid and large number of deployments from the start of trigger, the preparation stage before the automatic trigger is very labor-intensive and error-prone. Moreover, in view of the lack of overall network planning before deployment in the above configuration solutions, once a certain device is found to have been misconfigured earlier, it may need to be pushed over for redeployment.

### SUMMARY

According to at least some embodiments of the present disclosure, a network deployment method and apparatus are provided, to at least solve the problems of high operation complexity and low fault tolerance rate of the network deployment mode provided in related technologies.

According to an embodiment of the present disclosure, a network deployment method is provided, including: acquiring a network orchestration parameter, a dependency relation chain and a network topology, each protocol node in the dependency relation chain being preconfigured with a corresponding orchestration template configured to describe parameter information on which each protocol node depends; performing a network protocol orchestration according to the network orchestration parameter, the dependency relation chain and the network topology to generate network configuration information; and sending the network configuration information to a device.

According to another embodiment of the present disclosure, a network deployment apparatus is provided, including: a network orchestration module configured to acquire a network orchestration parameter, a dependency relation chain and a network topology, each protocol node in the dependency relation chain being preconfigured with a corresponding orchestration template configured to describe parameter information on which each protocol node depends, and perform a network protocol orchestration according to the network orchestration parameter, the dependency relation chain and the network topology to generate network configuration information; and a sending module configured to send the network configuration information to a device.

According to yet another embodiment of the present disclosure, a network deployment device is further provided, including: a network orchestration module, configured to acquire a network orchestration parameter, a dependency relation chain and a network topology, each protocol node in the dependency relation chain being preconfigured with a corresponding orchestration template configured to describe parameter information on which each protocol node depends, and perform a network protocol orchestration according to the network orchestration parameter, the dependency relation chain and the network topology to generate network configuration information; and a sending module configured to send the network configuration information to a device.

According to yet another embodiment of the present disclosure, a storage medium is further provided storing a computer program which, when executed, causes to carry out the steps in any of the above method embodiments.

According to yet another embodiment of the present disclosure, an electronic device is further provided, which includes a memory stored with a computer program, and a processor configured to execute the computer program to carry out the steps in any of the above method embodiments.

Through at least some embodiments of the present disclosure, the acquired network orchestration parameter, dependency relation chain and network topology are adopted to carry out overall network planning before network deployment, simplify the network deployment process, automatically generate the network configuration information, reduce manual participation, and then send the network configuration information to the device of the manufacturer. Therefore, the problems of high operation complexity and low fault tolerance rate of the network deployment mode provided in related technologies can be solved, and the operation complexity of the network deployment configuration process can be reduced by establishing the dependency relation chain, which is more conducive to the automatic deployment and rapid delivery of basic network in large data center.

### BRIEF DESCRIPTION OF DRAWINGS

The drawings described herein are configured to provide a further understanding of the present disclosure and constitute a part of the present application. The illustrative embodiments of the present disclosure and descriptions thereof are configured to explain the present disclosure, and do not constitute an improper limitation on the present disclosure, wherein:
Fig. 1 is a hardware structure block diagram of a computer terminal for a network deployment method according to an embodiment of the present disclosure;
Fig. 2 is a flowchart of a network deployment method according to an embodiment of the present disclosure;
Fig. 3 is a schematic diagram of networking logic according to an embodiment of the present disclosure;
Fig. 4 is a schematic diagram of a dependency relation chain according to an embodiment of the present disclosure;
Fig. 5 is a schematic diagram of another dependency relation chain according to an embodiment of the present disclosure;
Fig. 6 is a flowchart of a network orchestration process according to an embodiment of the present disclosure; and
Fig. 7 is a structure block diagram of a network deployment apparatus according to an embodiment of the present disclosure.

### DETAILED DESCRIPTION

The present disclosure will be described in detail below with reference to the accompanying drawings in conjunction with embodiments. It is to be noted that if not in collision, the embodiments and features therein in the present application may be combined with each other.

It should be noted that the terms "first", "second" and the like in the description, the claims and the drawings are configured to distinguish similar objects, but not necessarily configured to describe a specific sequence or a precedence order.

### Embodiment one

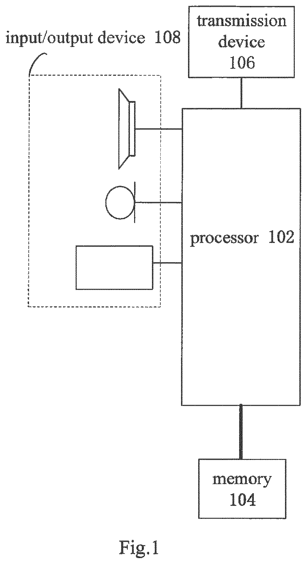

The method embodiment provided in embodiment one of the present application may be implemented in a mobile terminal, a computer terminal or a similar computing device. Taking the method running on a computer terminal as an example, Fig. 1 is a hardware structure block diagram of a computer terminal for a network deployment method according to an embodiment of the present disclosure. As shown in Fig. 1, the computer terminal may include one or more (only one is shown in Fig. 1) processor 102 (the processor 102 may include but is not limited to a processing device such as Microcontroller Unit (MCU) or Field-Programmable Gate Array (FPGA)) and a memory 104 configured to store data. Optionally, the computer terminal may also include a transmission device 106 with a communication function and an input/output device 108. It may be understood by those skilled in the art that the structure shown in Fig. 1 is only schematic, which does not limit the structure of the above computer terminal. For example, the computer terminal may also include more or fewer components than shown in Fig. 1, or have a different configuration from that shown in Fig. 1.

The memory 104 may be configured to store computer programs, for example, software programs and modules of application software, such as computer programs corresponding to the network deployment method in the embodiments of the present disclosure. The processor 102 executes various functional applications and data processing by running the computer programs stored in the memory 104, that is, to realize the above network deployment method. The memory 104 may include a high-speed random access memory, and may also include a non-volatile memory such as one or more magnetic storage devices, flash memory, or other non-volatile solid state memory. In some examples, the memory 104 may further include memories remotely located with respect to the processor 102, and these remote memories may be connected to the computer terminal through a network. Examples of the above network include, but are not limited to, the Internet, intranet, local area network, mobile communication network and combinations thereof.

The transmission device 106 is configured to receive or transmit data via a network. The specific example of the above network may include a wireless network provided by a communication provider of a computer terminal. In an example, the transmission device 106 includes a network interface controller (NIC), which may be connected with other network devices through a base station to communicate with the internet. In an example, the transmission device 106 may be a radio frequency (RF) module configured to wirelessly communicate with the internet.

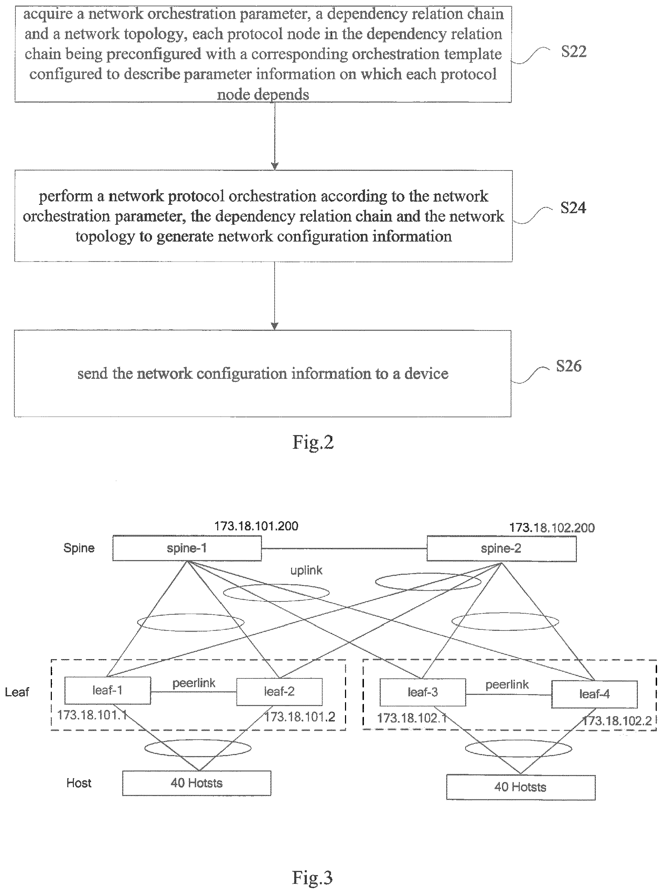

According to an embodiment of the present disclosure, a network deployment method running on the above computer terminal is provided. Fig. 2 is a flowchart of the network deployment method according to an embodiment of the present disclosure. As shown in Fig. 2, the method includes steps S22, S24 and S26.

At step S22, a network orchestration parameter, a dependency relation chain and a network topology are acquired. Each protocol node in the dependency relation chain is preconfigured with a corresponding orchestration template configured to describe parameter information on which each protocol node depends.

At step S24, a network protocol orchestration is performed according to the network orchestration parameter, the dependency relation chain and the network topology to generate network configuration information.

At step S26, the network configuration information is sent to a device.

Through the above steps, the problems of high operation complexity and low fault tolerance rate of the network deployment mode provided in related technologies can be solved, and the operation complexity of the network deployment configuration process can be reduced by establishing the dependency relation chain, which is more conducive to the automatic deployment and rapid delivery of basic network in large data center.

In some embodiments, the execution subject of the above steps may be a terminal, etc., but is not limited thereto.

The protocol nodes in the dependency relation chain refer to a plurality of protocols to be configured on the network, in which one protocol needs to depend on another protocol to complete specific network functions, and a protocol relation chain which constitutes a part of the dependency relation chain is established through the dependency relation between protocols. The parameter information that each protocol node depends on may include, but is not limited to, a pool parameter and a global parameter that each protocol node depends on.

In an embodiment, in step S22, acquiring the network orchestration parameter may include steps S221 and S222.

At step S221, a protocol parameter is acquired. The protocol parameter at least includes a protocol to be configured on a network, and a configuration parameter and a global parameter associated with the protocol to be configured.

At step S222, an orchestration parameter is acquired. Acquiring the orchestration parameter at least includes a step S2221.

At step S2221, a primary parameter is acquired, which is a representative parameter directed to an overall network structure and subjected to simplification processing.

The protocol parameter refers to a protocol to be configured on a network, a configuration parameter and a global parameter of the protocol. The orchestration parameter at least includes: a primary parameter, which is a representative parameter directed to the overall network structure and subjected to simplification processing.

In an embodiment, the network structure of a virtual data center (VDC) may be divided into a traditional single-layer underlay network and an overlay logical network built on the underlay network. The underlay network is a basic network, which is configured to carry the IP network of user services. The overlay network is a logical network constructed by virtual technology on the underlay network. The following takes the underlay network of VDC as an example for deployment.

Fig. 3 is a schematic diagram of networking logic according to an embodiment of the present disclosure. As shown in Fig. 3, the underlay network adopts a spine-leaf topology and carries a service plane. The deployment requirements include stacking an access switch to achieve the main/standby switching, and connecting the access switch to an aggregation switch. The configuration protocols include but are not limited to: Link Aggregation Control Protocol (LACP), Virtual Local Area Network (VLAN), Intermediate System to Intermediate System (hereinafter referred to as I Protocol), and realize three-layer interworking. The specific implementation process of this embodiment is as follows.

Initializing network orchestration may include: setting a protocol parameter and an orchestration parameter. The protocol parameter may include a configuration parameter of the protocol and a global parameter of the protocol. The orchestration parameter may at least include: a primary parameter.

The primary parameter refers to a simplified and representative parameter directed to the overall network structure. In general, if a user sets the primary orchestration parameter, the network orchestration can be realized. The following is an example of the primary parameter of the orchestration network:

### [service]

loopback1=10.30.0.1/32
loopback2=10.30.1.1/32
vlanid=101:200
vlanip=10.30.3.2/30
router=I

Where vlanid=101 and vlanip=10.30.3.2/30, which defines a vlan allocation. An initial value of identification is 101, and vlan ip is allocated in step size, which is 10.30.3.2/30, 10.30.3.6/30, 10.30.3.10/30, etc. In addition, the routing protocol I is defined, and two loopbacks (ip address is allocated in step size) are defined to join a router advertisement interface.

In another embodiment, the spine-leaf network of a data center is configured with an underlay network, which carries both a service plane and a store plane, that is, the service and store of the data center share an underlay basic network. The store plane needs VRF isolation, and link aggregation groups join different VLANs. Different from the previous embodiment, in this embodiment, the profile parameters of the orchestrator are designed, and the underlay network carries the service plane and the store plane, herein the store plane is isolated by VRF The specific example is as follows:

### [service]

loopback1=10.30.0.1/32
loopback2=10.30.1.1/32
vlanid=101:200
vlanip=10.30.3.2/30
router=I

### [store]

vrf=store
loopback3=10.30.25.1/32
vlanid=1101:200
vlanip=10.30.26.2/30
router=I

In an embodiment, in step S222, acquiring the orchestration parameter may further include a step S2222.

At step S2222, an advanced parameter is acquired, the advanced parameter is a parameter acquired by orchestrating the primary parameter.

In some embodiments, the orchestration parameter may further include an advanced parameter, which refers to the parameter acquired by orchestrating the primary parameter (i.e., the parameter orchestrator). The advanced parameter is more comprehensive and is directed to the configuration protocol, and support the parameter set by users. The parameter orchestrator refers to a process of refining the primary parameter to generate a more comprehensive advanced parameter. This process will be further described in conjunction with the configuration process of the dependency relation chain mentioned below.

In an embodiment, in step S2222, acquiring the advanced parameter at least includes a step S22221.

At step S22221, a pool parameter is acquired, the pool parameter is configured to define an allocation range of a parameter value.

The pool parameter refers to an allocation range, which provides parameters defined by list and initial value plus step size.

In an embodiment, in step S22, acquiring the dependency relation chain may include steps S223, S224 and S225.

At step S223, a protocol relation chain is acquired, the protocol relation chain is configured to describe a dependency relation for each of a plurality of protocols to be configured on a network.

At step S224, a pool parameter relation chain is acquired, the pool parameter relation chain is configured to describe a dependency relation for each of pool parameters to be used on the network.

At step S225, a dependency relation between the protocol relation chain and the pool parameter relation chain is acquired, so that the pool parameter relation chain is configured to allocate values for parameters in the protocol relation chain.

The dependency relation refers to that one configuration item needs to depend on another configuration item to complete a specific function. The dependency relation chain refers to the relation chain established by multiple configuration items through the dependency relation.

The dependency relation chain may include a protocol relation chain and a pool parameter relation chain. The protocol relation chain refers to that one protocol needs to depend on another protocol to complete a specific network function, and the protocol relation chain is established through the dependency relation between protocols. The pool parameter relation chain refers to that the allocation of one pool parameter depends on another pool parameter. In addition, the protocol relation chain needs to depend on the pool parameter relation chain at the same time, so as to complete the value allocation of protocol parameters in the protocol relation chain.

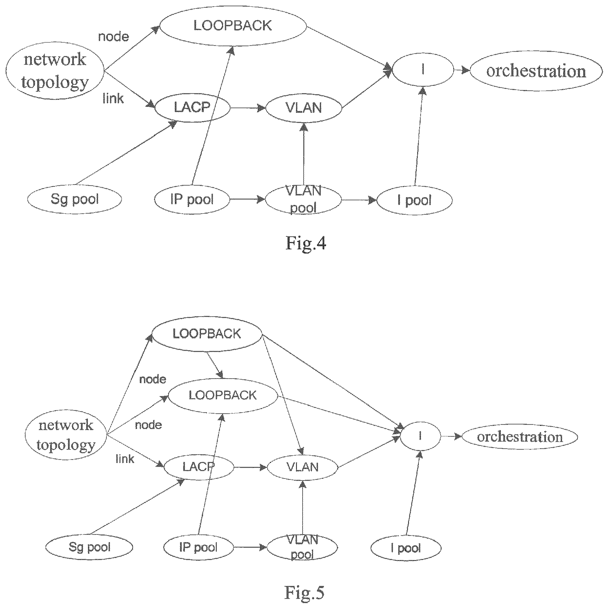

Fig. 4 is a schematic diagram of a dependency relation chain according to an embodiment of the present disclosure. As shown in Fig. 4, the protocol relation chain defines local loopback interface (LOOPBACK), LACP, VLAN and I protocol. The protocol relation may be interpreted as follows: if the link joins the aggregation group LACP to realize connection reliability, load balancing or dynamic link backup, the link is the dependency of the aggregation group LACP; if the aggregation group LACP joins VLAN to realize network isolation, the aggregation group LACP is the dependency of VLAN division; if VLAN or LOOPBACK joins the router advertisement interface I, VLAN or LOOPBACK is the dependency of I.

The pool parameter relation chain defines Sg pool, IP pool, VLAN pool and I pool. By using the parameter orchestrator, user parameters can be orchestrated to get advanced parameters. The advanced parameters may include:
(1) IP pool generated by user parameter orchestration, where "name" is the import item of the pool parameter dependency or protocol relation dependency, and the output of orchestration is as follows:

   ```
   "ippool": [{"next": "10.30.0.1/32",
               "name": "ip.service.loopback1",
               "network": "service"},
             { "next": "10.30.1.1/32",
               "name": "ip.service.loopback2",
               "network": "service"},
             { "next": "10.30.3.2/30",
               "name": "ip.service.vlan",
               "network": "service" }
   ]
```
(2) vlan pool generated by user parameter orchestration, where the dependency chain includes "ippool", which is imported through ippool, and the vlan dependency chain also outputs the name item. In the spine-leaf networking, there are two spine nodes, and the vlan of each spine network is allocated independently, so the output of orchestration is as follows:

   ```
   "vlanpool": [ { "ippool": "ip.service.vlan",
                  "name": "spine-1.service",
                  "next": 101},
   { "ippool": "ip.service.vlan",
                  "name": "spine-2.service",
                  "next": 301}
   ]
```
(3) Sg pool and I pool in the pool parameter relation chain, where the Sg pool is responsible for the ID allocation of LACP SMARTGROUP, and the I pool is responsible for the systemid allocation, which will not be described in detail here.

In an embodiment, in step S22, acquiring the dependency relation chain may further include a step S226:
At step S226, a match relation is established according to the acquired dependency relation chain. The match relation includes a plurality of orchestration items, and a type, an orchestration template and a dependency relation corresponding to each orchestration item.

Each protocol in the protocol relation chain defines an orchestration template. The orchestration template defines the orchestration fields of the protocol, including the pool parameter and global parameter of dependency. The orchestration template further defines a type in which the orchestration items in a relation chain may be a pool or a protocol. That is, an orchestration item = type + template + dependency.

Table 1 is an explanation of each orchestration item in the dependency relation chain of Fig. 4, as shown in Table 1:

**Table 1**

| orchestration item | type | template | dependency |
|---|---|---|---|
| IP pool | pool | IP list or IP initiation and step size | NO |
| VLAN pool | pool | VLAN ID initiation and step size | IP pool |
| SG pool | pool | SMARTGROUP ID initiation and step size | NO |
| LACP | protocol | LACP template | SG pool, topology |
| VLAN | protocol | VLAN template | VLAN pool, LACP |
| LOOPBACK | protocol | LOOPBACK template | IP pool |
| I | protocol | I template | VLAN, LOOPBACK |

Each protocol in the above protocol relation chain also defines an orchestration template. The orchestration template defines the orchestration fields of the protocol, including at least the pool parameter and global parameter of dependency. Furthermore, the orchestration template is orchestrated based on the user's primary parameters, as detailed below:
(1) The parameter orchestrator generates a LOOPBACK template, and imports the dependency chain into ippool:

   ```
   "loopback": [
   {
             "interface": "loopback1",
             "ippool": "ip.service.loopback1",
             "role": "leaf,spine",
             "description": "For:service"
   },
   {
             "interface": "loopback2",
             "ippool": "ip.service.loopback2",
             "role": "leaf,spine",
             "description": "For:service"
   }]
```
(2) The parameter orchestrator generates a LACP template, imports the dependency chain into VLAN (that is, VLAN depends on LACP), parameterizes sgmode, ifmode, etc. are parameterized, and depends on pool sgpool. The specific example is as follows:

   ```
   "lacp": [{ "vlan": "spine-1.service",
          "description": "To:$peerhost/$peersg",
          "sgpool": "spineid",
          "sgmode": "802.3ad",
          "ifmode": "active",
          "name": "spine-1"}]
```
(3) The parameter orchestrator generates a VLAN template, and the dependency chain at least includes vlanpool, parameterized mode, mtu, description, and the dependency relation chain output name. It can be seen that the VLAN template depends on the pool vlanpool:

   ```
   "vlan": [{ "vlanpool": "spine-1.service",
             "mode": "trunk",
             "description": "To:$peerhost for service",
             "name": "spine-1.service",
             "mtu": 9000 },
   { "vlanpool": "spine-2.service",
             "mode": "trunk",
             "description": "To:$peerhost for service",
             "name": "spine-2.service",
   "mtu": 9000 }
   ]
```
(4) The parameter orchestrator generates an I template, which depends on VLAN (imported through intf.vlan) and LOOPBACK (imported through intf.loopback), and parameterizes max_lsp_lifetime, metric_style and is type. The pool parameters depend on Ipool, and the allocation at least includes area and systemid. The specific example is as follows:

   ```
   "I": [{ "processid": 10,
             "redistribute": "connected",
             "intf.network_p2p": "true",
             "name": "service",
             "intf.passive_mode": "enable",
             "max_lsp_lifetime": 65535,
             "metric_style": "wide",
             "area": "01.0471",
             "intf.circuit_type": "level-2-only",
             "role": "leaf,spine",
             "intf.loopback": "loopback1,loopback2",
             "intf.vlan": "spine-1.service",
             "is_type": "level-2",
             "systemid": "I.systemid.service",
             "maximum_paths": 4,
             "lsp_refresh_time": 65000
      }]
```

In addition, in view of the fact that the service and store of the data center share an underlay basic network, Fig. 5 is a schematic diagram of another dependency relation chain according to an embodiment of the present disclosure. As shown in Fig. 5, the orchestration dependency relation chain of VRF is VRF→LOOPBACK→LACP→VLAN→I, and Table 2 is a specific explanation of each orchestration item in the dependency relation shown in Fig. 5, as shown in Table 2:

**Table 2**

| | | | |
|---|---|---|---|
| orchestration item | type | template | dependency |
| IP pool | pool | IP list or IP initiation and step size | NO |
| VLAN pool | pool | VLAN ID initiation and step size | IP pool |
| SG pool | pool | SMARTGROUP ID initiation and step size | NO |
| LACP | protocol | LACP template | SG pool, topology |
| VLAN | protocol | VLAN template | VLAN pool, LACP, VRF |
| LOOPBACK | protocol | LOOPBACK template | IP pool, VRF |
| I | protocol | I template | VLAN, LOOPBACK, VRF |
| VRF | protocol | VRF template | topology |

In an embodiment, in step S22, acquiring the network topology at least includes a step S227.

At step S227, a neighbor relation among devices in a network is acquired. The neighbor relation at least includes device information at a port of each of the devices and information relating to the port that is connected.

In an embodiment, the neighbor relation further includes a network role of each device in the network and neighbor models between neighbor devices.

The network topology is configured to describe the neighbor relation between nodes in the network. The neighbor relation includes information of a corresponding apparatus to which a port of each of the devices connects in the network and connected port information.

The neighbor relation includes not only the connection relation between devices and ports, but also the neighbor model, that is, the network role of the device and the neighbor models between devices.

The network topology is a neutral description of network topology, which has nothing to do with specific device types or device manufacturers, nor with the specific description format and storage.

In an embodiment, according to the network topology generation method, a LLDP-based neighbor discovery protocol may be adopted. That is, first the device is logged in according to information such as Internet Protocol (IP), and the LLDP information of the device is checked, including but not limited to: the device itself, the peer device, and the connection port; then, the topology of the overall network, relations between nodes and roles of the nodes are analyzed by gathering the LLDP information.

In another embodiment, according to the network topology generation method, a graphic-based method may be configured to draw devices and connect ports to identify the specific port numbers, device IPs, user names, passwords and other information, and identify the relations between nodes and roles of the nodes on the graph, so as to obtain the topology structure of the overall network.

In another embodiment, the LLDP-based topology generation method and the graphic-based topology generation method are combined to ensure the correctness of the network topology.

In the following, taking the topology generation method being a network topology based on LLDP dynamic discovery as an example for further explanation, the topology generation method may include:
(1) Configuring information of a device to be deployed, which at least includes: IP address of the device, login user name and password, device type and role. In an embodiment, the IP address list is adopted as follows:
   [devices]
   173.18.101.200=role:spine,username:who,password:who,hostname:spine-1
   173.18.101.1=role:leaf,username:who,password:who
   173.18.101.2=role:leaf,username:who,password:who
   173.18.102.200=role:spine,username:who,password:who,hostname:spine-2
   173.18.102.1=role:leaf,username:who,password:who
   173.18.102.2=role:leaf,username:who,password:who
(2) Neighbor topology discovery: reading the listed devices to be deployed, and generating a neighbor relation of each of the devices, where the neighbor relation includes information of a corresponding apparatus to which a port of each of the devices connects and a connected port information. Taking the aggregation switch 1 as an example, the specific example is as follows:

   ```
   "topology": [{
                  "remote": [{
                            "description": "3.02.20.B32.P02, leaf-1, 5900 Software",
                            "ip": "173.18.101.1",
                            "hostname": "leaf-1",
                            "mac": "74:4a:a4:09:72:94",
                            "interface": [{
                                      "remote": "xgei-0/1/1/2",
                                      "local": "xgei-0/1/1/22" },
                                      { "remote": "xgei-0/1/1/4",
                            "local": "xgei-0/1/1/24" }
                            ]},
                         { "description": "5.00.00R2, leaf-2, 5900 Software",
                              "ip": "173.18.101.2",
                              "hostname": "leaf-2",
                              "mac": "74:4a:a4:09:72:48",
                              "interface": [{
                                      "remote": "xgei-0/1/1/2",
                                      "local": "xgei-0/1/1/38" },
                                      { "remote": "xgei-0/1/1/4",
                                      "local": "xgei-0/1/1/40" }
   ]}
   ],
                         "local": { "ip": "173.18.101.200",
                                 "mac": "74:4a:a4:09:6a:84",
                                 "hostname": "spine-1",
                                 "description": "3.02.20.B32.P02, spine-200, 5900
                                 Software" }
   }
   ]
```
(3) Neighbor relation: the neighbor relation of the above spine-leaf network topology, including but not limited to an up-link (transmission link from decentralized point to centralized point in point-to-multipoint system) model and a peer-link model.

The up-link model represents the relation between spine and leaf nodes in the spine-leaf topology, such as the relation between spine-1 and leaf-1. The peer-link model represents the relation between leaf and leaf nodes in the spine-leaf topology, such as the relation between leaf-1 and leaf-2.

Through the above steps, that is, initializing network orchestration, configuring dependency relation chain, and generating network topology, the preparatory work for network orchestration is completed, and the next step is to start the orchestration.

In an embodiment, in step S24, performing the network protocol orchestration according to the network orchestration parameter, the dependency relation chain and the network topology to generate the network configuration information includes steps S241, S242, S243 and S244.

At step S241, a device to be orchestrated from the network topology is selected.

At step S242, a neighbor relation of the device to be orchestrated is read.

At step S243, all neighbor devices are traversed according to the neighbor relation, and a port connection orchestration is performed for the device to be orchestrated and the neighbor devices traversed each time respectively.

At step S244, it is judged whether there is a device that has not been orchestrated in the network topology, if so, return to step S241, and if not, the network configuration information is generated.

A node in the network topology is selected and the neighbor relation of the node is read. All neighbor nodes are traversed, and a port connection orchestration is performed for the selected node and the neighbor nodes.

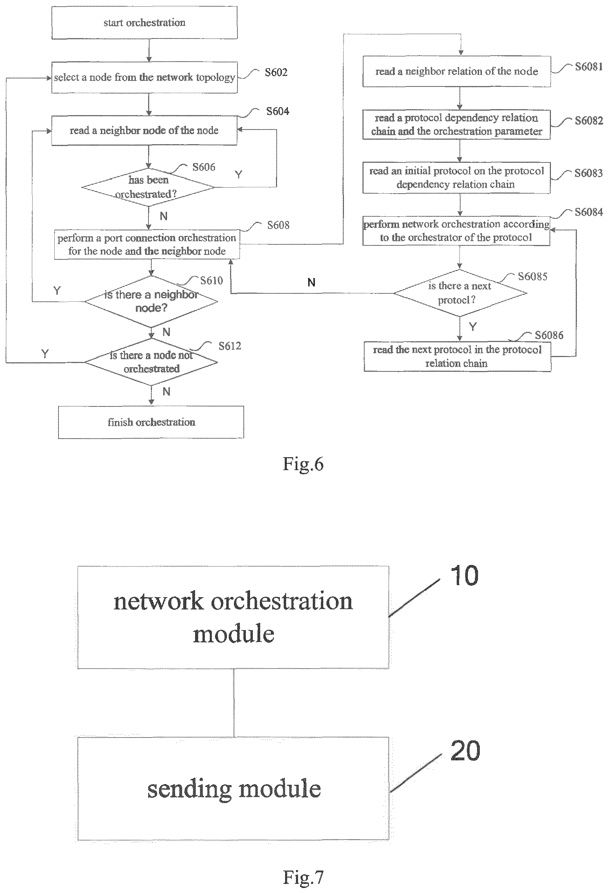

Fig. 6 is a flowchart of a network orchestration process according to an embodiment of the present disclosure. As shown in Fig. 6, the process may include the following execution steps.

At step S602, a device to be orchestrated is selected from the network topology.

Still taking Fig. 3 as an example, a spine-1 aggregation switch in the network topology is selected as a fulcrum, the neighbor relations are read, all the neighbor relations of the fulcrum are acquired, including leaf-1 and leaf-2, and then an orchestration is performed with reference to the neighbor relations.

At step S604, a neighbor device of the device to be orchestrated is read according to the neighbor relation of the device to be orchestrated.

For example, the neighbor device leaf-1 of spine-1 is read from the neighbor relation.

At step S606, it is judged whether the neighbor device has been orchestrated, if so, return to step S604; if not, proceed with step S608.

At step S608, a port connection orchestration is performed for the device to be orchestrated and the neighbor device.

Since the neighbor device leaf-1 has not been orchestrated, it is necessary to perform a port connection orchestration for the device to be orchestrated (spine-1) and the neighbor device leaf-1.

In this step, the following execution steps may be further included.

At step S6081, a neighbor relation of the device to be orchestrated is read.

The neighbor relation between spine-1 and leaf-1 as well as leaf-2 is an up-link model, so it needs to be orchestrated according to the up-link structure.

At step S6082, a protocol dependency relation chain and an orchestration parameter are read.

Taking spine-1 and leaf-1 as examples, an orchestration is performed according to the up-link model, and the protocol dependency relation chain is read, that is, the orchestration is performed according to LOOPBACK→LACP→VLAN→I.

At step S6083, an initial protocol of the protocol dependency relation chain is read.

Taking LOOPBACK as an example, LOOPBACK is orchestrated with reference to the orchestration template of LOOPBACK, and the dependency item thereof is ippool.

At step S6084, a network orchestration is performed according to the orchestrator of the protocol.

An ip address is allocated from the ip pool, i.e. ip.service.LOOPBACK1, to replace the LOOPBACK template.

At step S6085, it is judged whether there is a protocol that has not been orchestrated in the protocol dependency relation chain, if so, proceed with step S6086, and if not, turn to step S608.

At step S6086, a next protocol to be orchestrated in the protocol dependency relation chain is read, and then step S6084 is executed.

Taking LACP as an example, its dependency items are neighbor topology and sg pool. With reference to the orchestration template of LACP, smartgroupID is applied for from sg pool, outlet ports xgei-0/1/1/22 and xgei-0/1/1/24 from spine-1 to leaf-1 are obtained, LACP group of spine-1 is orchestrated, outlet ports xgei-0/1/1/2, xgei-0/1/1/4 from leaf-1 to spine-1 are obtained, and LACP group of leaf-1 is orchestrated. And so on, until all protocols in the protocol dependency relation chain are orchestrated.

At step S610, it is judged whether there are neighbor nodes, if so, turn to step S604, otherwise, proceed with step S612.

At step S612, it is judged whether there is a device that has not been orchestrated, if so, turn to step S602, otherwise, the network protocol orchestration is finished.

In an embodiment, in step S243, traversing all neighbor devices according to the neighbor relation and performing the port connection orchestration for the device to be orchestrated and the neighbor devices traversed each time respectively may include steps S2431 and S2432.

At step S2431, all protocols on the protocol relation chain are traversed from an initial protocol on the protocol relation chain.

At step S2432, for each protocol, the port connection orchestration are performed for the device to be orchestrated and the neighbor devices traversed each time according to an orchestration template corresponding to a current protocol until all protocols are orchestrated.

Performing the port connection orchestration includes reading the protocol relation chain and the orchestration parameter, traversing all protocols on the protocol relation chain from an initial protocol on the protocol relation chain, selecting for each protocol, the template of the protocol to orchestrate on the selected node and neighbor nodes, and outputting the orchestration content. For the specific orchestration process may refer to the orchestration example provided in the flow shown in Fig. 6 above, which will not be described in detail here.

In an embodiment, in step S2432, performing the port connection orchestration for the device to be orchestrated and the neighbor devices traversed each time according to the orchestration template corresponding to the current protocol may include steps S24321 and S2432.

At step S24321, the current protocol is parsed according to the orchestration template corresponding to the current protocol to obtain a parsed field.

At step S24322, a value of the pool parameter corresponding to the parsed field is determined from an allocation range defined by the pool parameter, and a value of the global parameter corresponding to the parsed field is replaced with a predefined value of the global parameter.

Orchestration is an analysis of protocol orchestration template. For pool parameters, it is necessary to apply for relevant values from pool parameter pool. For global parameters, it needs to be replaced with the values defined by global parameters. Finally, the orchestration content (equivalent to the above network configuration information) are obtained by assembling or synthesizing. The orchestration content has nothing to do with the device type and the specific manufacturer's products, and is a neutral organization structure directed to protocol description.

Still taking Fig. 3 as an example, a spine-1 aggregation switch in the network topology is selected as a fulcrum, the neighbor relations are read, all the neighbor relations of the fulcrum are acquired, including leaf-1 and leaf-2, and then an orchestration is performed with reference to the neighbor relations.

As the neighbor relation between spine-1 and leaf-1, as well as leaf-2 is an up-link model, so it may be orchestrated according to the up-link structure. As leaf-1 and leaf-2 have a direct relation which is a peer-link model, it may be orchestrated according to the peer-link structure.

Take spine-1 and leaf-1 as examples, the orchestration is performed according to the up-link structure, and the protocol dependency relation chain is read, that is, the orchestration is performed according to LOOPBACK→LACP→VLAN→I, and the specific orchestration process is as follows:
(1) Orchestrating LOOPBACK with reference to the orchestration template of LOOPBACK, where the dependency item thereof is ippool. An ip address is allocated from the ip pool, i.e. ip.service.LOOPBACK1, and the LOOPBACK template is replaced, to get the following orchestration:

   ```
   "13intf": [{"interface": "loopback1",
             "state": "create",
             "ipaddr": "10.30.0.1/32",
             "description": "For:service"},
             {"interface": "loopback2",
             "state": "create",
             "ipaddr": "10.30.1.1/32",
             "description": "For:service"}]
```
(2) Orchestrating LACP, where the dependency items thereof are neighbor topology and sg pool. With reference to the orchestration template of LACP, smartgroupID is applied for from sg pool, outlet ports xgei-0/1/1/22 and xgei-0/1/1/24 from spine-1 to leaf-1 are obtained, lacp group of spine-1 is orchestrated, outlet ports xgei-0/1/1/ 2, xgei-0/1/1/4 from leaf-1 to spine-1 are obtained, and lacp group of leaf-1 is orchestrated. The lacp group of spinner-1 output by orchestrator is as follows:

   ```
   "lacp": [{"state": "create",
          "mode": "802.3ad",
          "interfaces": [{"interface": "xgei-0/1/1/22",
                       "mode": "active"},
                  {"interface": "xgei-0/1/1/24",
                       "mode": "active"}],
          "smartgroup": "smartgroup30",
          "description": "To:leaf-1/smartgroup3"
          }]
```

   The lacp group of leaf-1 output by orchestrator is as follows:

   ```
   "lacp": [{"state": "create",
          "mode": "802.3ad",
          "interfaces": [{"interface": "xgei-0/1/1/2",
                       "mode": "active"},
                    {"interface": "xgei-0/1/1/4",
                       "mode": "active"}],
                    "smartgroup": "smartgroup3",
                    "description": "To:spine-1/smartgroup30"
                  }] 
```
(3) Orchestrating VLAN, where the dependency items thereof are VLAN pool and LACP. With reference to the orchestration template of VLAN, according to VLAN pool and specific IP allocation solution, ID 101 is allocated from VLAN pool and LACP (smartgroup33) of spine-1 joins VLAN. The output example of the orchestrator is as follows:

   ```
   "vlan": [{ "smartgroup": "smartgroup33",
               "vlan": 101,
               "mode": "trunk",
               "state": "create"
                    }],
```

   LACP (smartgroup3) of leaf-1 joins VLAN, and the output example of the orchestrator is as follows:

   ```
   "vlan": [{ "smartgroup": "smartgroup3",
               "vlan": 101,
               "mode": "trunk",
               "state": "create"
                    }],
```

   The three-layer interface of VLAN (vlan101 generated above) is orchestrated, an IP is allocated from the IP pool of VLAN, and the spin-1 configuration generated by the orchestrator is as follows:

   ```
   "13intf": [{"interface": "vlan101",
   "ipmtu": 9000,
   "state": "create",
   "ipaddr": "10.30.3.1/30",
   "description": "To:leaf-1 for service"}]
```

   The leaf-1 configuration generated by the orchestrator is as follow:

   ```
   "13intf": [{"interface": "vlan101",
   "ipmtu": 9000,
   "state": "create",
   "ipaddr": "10.30.3.2/30",
   "description": "To:spine-1for service" }]
```
(4) Orchestrating I, and vlan101 joining an interface of I. With reference to the orchestration template of I, the spin-1 configuration generated by the orchestrator is as follows (leaf-1 configuration is omitted):

   ```
   "I": [{"redistribute": "connected",
          "area": "01.0471",
          "max_lsp_lifetime": 65535,
          "maximum_paths": 4,
          "state": "create",
          "process_id": 20,
          "system_id": "0100.3000.5099",
          "metric_style": "wide",
          "is_type": "level-2",
          "interfaces": [{
                  "interface": "vlan101",
                  "circuit_type": "level-2-only",
                  "network_p2p": "true",
                  "I": "enable"}],
          "lsp_refresh_time": 65000
          }]
```

From the above analysis, it can be seen that if the definition of the pool parameter, the dependency relation chain and the orchestration template are determined, the network orchestration will become a very fast and automated process.

Further, on the basis of the above embodiments, a new orchestration of store plane is added, including VRF isolation for store plane.

An example of orchestrating VRF is as follows:

```
   "vrf": [{"rd": "100:100",
        "state": "create",
        "ipv4_rti": "100:100",
        "description": "vrf for store",
        "ipv4_rte": "100:100",
        "vrf": "store"}]
```

Orchestrating LACP to join VLAN (vlan101, VLAN1101). The example is as follows:

```
   "switchvlan": [{"smartgroup": "smartgroup30",
        "vlan": 1101,
        "mode": "trunk",
        "state": "create"},
        {"smartgroup": "smartgroup30",
        "vlan": 101,
        "mode": "trunk",
        "state": "create"}]
```

Orchestrating VLAN, that is, vlan101 and lan1101 orchestrated above. The example is as follows:

```
   "13intf": [{ "ipmtu": 9000,
          "state": "create",
          "description": "To:leaf-1 for store",
          "ipvrf": "store",
          "interface": "vlan1101",
          "ipaddr": "10.30.26.1/30"},
          { "interface": "vlan101",
          "ipmtu": 9000,
          "state": "create",
          "ipaddr": "10.30.3.1/30",
          "description": "To:leaf-1 for service"}
   ]
```

Other orchestration processes are similar to LACP orchestration.

In an embodiment, in step S26, sending the network configuration information to the device may include the steps S261 and S262.

At step S261, the network configuration information is parsed into a message recognizable by the device according to a requirement of a sending channel.

At step S262, the recognizable message obtained through parsing is sent to the device.

The orchestration content is a neutral organizational structure, which needs to be parsed once to adapt to the specific device when it is sent to the manufacturer's device. Parsing may be based on the requirement of the sending channel, such as Remote Terminal Protocol (TELNET), Secure Shell Protocol (SSH) or Network Configuration (NETCONF) Protocol based on Extensible Markup Language (XML), and then the relevant message recognizable by the device is constructed through parsing. The network deployment is completed when the message passes through the channel and is sent to the device. At this point, the installation dependency relation chain is basically orchestrated and the underlay basic (service plane) network of the data center is constructed.

In an embodiment, in step S26, sending the network configuration information to the device may further include a step S263.

At step S263, processes of network protocol orchestration, parsing network configuration information and sending network configuration information are detected to generat a detection log.

After the orchestration content is sent to the device, the correctness of the overall process from orchestration to parsing, and then to sending to the device may be verified by self-detection, and logs may be provided. In addition, in order to improve the sending efficiency, a parallel mechanism is provided for the output and sending of the orchestrator, thus speeding up the deployment efficiency.

Through the above analysis, the embodiments shown in Fig. 4 and Fig. 5 are expanded from the implementation level, and generally include five steps: initializing orchestration parameter, configuring dependency relation chain, generating network topology, orchestrating and sending. The following will introduce how to quickly deploy the network from the application level.

In an embodiment relating to automated deployment of an underlay network, first, an example of user-defined primary orchestration parameter is as follows:
[devices]
   173.18.101.200=role:spine,username:who,password:who,hostname:spine-1
   173.18.101.1=role:leaf,username:who,password:who
   173.18.101.2=role:leaf,username:who,password:who
   173.18.102.200=role:spine,username:who,password:who,hostname:spine-2
   173.18.102.1=role:leaf,username:who,password:who
   173.18.102.2=role:leaf,username:who,password:who
[service]
   loopback1=10.30.0.1/32
   loopback2=10.30.1.1/32
   vlanid=101:200
   vlanip=10.30.3.2/30
   router=I
[store]
   vrf=store
   loopback3=10.30.25.1/32
   vlanid=1101:200
   vlanip=10.30.26.2/30
   router=I

Then, according to the deployment process described in the above two embodiments, the generation of pool parameter relation chain and protocol relation dependency chain is completed. After LLDP method is adopted to generate network topology and network orchestration is performed based on the topology discovered by LLDP, the orchestration content is sent to complete the automation of the overall deployment process.

It should be noted that the implementation process of the above embodiments relates to orchestration based on a specific network protocol (for example, the protocol chain of LACP+VLAN+I) in combination with a specific commercial data center switch. However, these do not cause undue restrictions on the technical solution provided by the present disclosure. In addition, even if the protocol orchestration is added in the implementation process, for example, the routing protocol enables Open Shortest Path First (OSPF), it does not exceed the protection scope of the technical solution provided by the present disclosure.

Through the description of the above implementations, it can be clearly understood by those skilled in the art that the method according to the above embodiments may be realized by means of software plus necessary general hardware platform, and of course it may also be realized by hardware, but in many cases the former is a better implementation. Based on this understanding, the technical solutions of the present disclosure in essence or the part that contributes over the prior art may be embodied in the form of software products, which are stored in a storage medium (such as ROM/RAM, magnetic disk, optical disk) and include several instructions to make a terminal device (such as a mobile phone, a computer, a server, or a network device, etc.) execute the method described in various embodiments of the present disclosure.

### Embodiment two

In this embodiment, a network deployment apparatus is further provided, which is configured to implement the above embodiments, and what has been explained will not be repeated. As used below, the term "module" may be a combination of software and/or hardware that implements a predetermined function. Although the apparatus described in the following embodiments is preferably implemented in software, the implementation of hardware, or a combination of software and hardware, is also possible and contemplated.

Fig. 7 is a structure block diagram of a network deployment apparatus according to an embodiment of the present disclosure. As shown in Fig. 7, the apparatus includes a network orchestration module 10 and a sending module 20. The network orchestration module 10 is configured to: acquire a network orchestration parameter, a dependency relation chain and a network topology, each protocol node in the dependency relation chain being preconfigured with a corresponding orchestration template configured to describe parameter information on which each protocol node depends; and perform a network protocol orchestration according to the network orchestration parameter, the dependency relation chain and the network topology to generate network configuration information. The sending module 20 is configured to send the network configuration information to a device.

In an embodiment, the network orchestration module 10 includes: a first acquisition unit (not shown in the figure), configured to acquire a protocol parameter which at least includes a protocol to be configured on a network, and a configuration parameter and a global parameter associated with the protocol to be configured; a second acquisition unit (not shown in the figure), configured to acquire an orchestration parameter which at least includes a primary parameter, which is a representative parameter directed to the overall network structure and subjected to simplification processing.

In an embodiment, the second acquisition unit (not shown in the figure) is further configured to acquire an advanced parameter which is a parameter acquired by orchestrating the primary parameter.

In an embodiment, the second acquisition unit (not shown in the figure) is further configured to acquire a pool parameter which is configured to define an allocation range of a parameter value.

In an embodiment, the network orchestration module 10 includes: a third acquisition unit (not shown in the figure), configured to acquire a protocol relation chain which is configured to describe a dependency relation for each of a plurality of protocols to be configured on a network; a fourth acquisition unit (not shown in the figure), configured to acquire a pool parameter relation chain which is is configured to describe a dependency relation for each of pool parameters to be used on the network; a fifth acquisition unit (not shown in the figure), configured to acquire a dependency relation between the protocol relation chain and the pool parameter relation chain, so that the pool parameter relation chain is configured to allocate values for parameters in the protocol relation chain.

In an embodiment, the network orchestration module 10 further includes an establishment unit (not shown in the figure), which is configured to establish a match relation according to the acquired dependency relation chain. The match relation includes a plurality of orchestration items, and a type, an orchestration template and a dependency relation corresponding to each orchestration item.

In an embodiment, the network orchestration module 10 includes a sixth acquisition unit (not shown in the figure), which is configured to acquire a neighbor relation among devices in the network. The neighbor relation at least includes device information at a port of each of the devices and information relating to the port that is connected.

In an embodiment, the neighbor relation further includes a network role of each device in the network and neighbor models between neighbor devices.

In an embodiment, the network orchestration module 10 includes: a selection unit (not shown in the figure), configured to select a device to be orchestrated from the network topology; a reading unit (not shown in the figure), configured to read a neighbor relation of the device to be orchestrated; an orchestration unit (not shown in the figure), configured to traverse all neighbor devices according to the neighbor relation and perform a port connection orchestration for the device to be orchestrated and the neighbor devices traversed each time respectively; and a judgment unit (not shown in the figure), configured to judge whether there is a device that has not been orchestrated in the network topology, if so, return to the selection unit, and if not, generate the network configuration information.

In an embodiment, the orchestration unit (not shown in the figure) includes: a traversal subunit (not shown in the figure), configured to traverse all protocols on the protocol relation chain from an initial protocol on the protocol relation chain; an orchestration subunit (not shown in the figure), configured to perform for each protocol, the port connection orchestration for the device to be orchestrated and the neighbor devices traversed each time according to an orchestration template corresponding to a current protocol until all protocols are orchestrated.

In an embodiment, the orchestration subunit (not shown in the figure) is configured to parse the current protocol according to the orchestration template corresponding to the current protocol to obtain a parsed field; and determine a value of the pool parameter corresponding to the parsed field from an allocation range defined by the pool parameter and replace a value of the global parameter corresponding to the parsed field with a predefined value of the global parameter.

In an embodiment, the sending module 20 includes: a parsing unit (not shown in the figure), configured to parse the network configuration information into a message recognizable by the device according to a requirement of a sending channel; a sending unit (not shown in the figure), configured to send the recognizable message obtained through parsing to the device.

In an embodiment, the delivery module 20 further includes: a detection unit (not shown in the figure), which is configured to detect processes of network protocol orchestration, parsing network configuration information and sending network configuration information, and generate a detection log.

It should be noted that the above modules may be realized by software or hardware, and the latter may be realized by the following ways, but not limited thereto: the above modules are all located in a same processor; or, the above modules are respectively located in different processors in the form of arbitrary combination.

### Embodiment three

According to an embodiment of the present disclosure, a storage medium is further provided, which stores a computer program configured to, when running, execute the steps in any of the above method embodiments.

In some embodiments, the storage medium may be configured to store a computer program for executing the following steps:
S1: acquiring a network orchestration parameter, a dependency relation chain and a network topology, each protocol node in the dependency relation chain being preconfigured with a corresponding orchestration template configured to describe parameter information on which each protocol node depends;
S2: performing a network protocol orchestration according to the network orchestration parameter, the dependency relation chain and the network topology to generate network configuration information; and
S3: sending the network configuration information to a device.

In some embodiments, the storage medium is further configured to store a computer program for executing the following steps:
S1: acquiring a protocol parameter which at least includes: a protocol to be configured on a network, and a configuration parameter and a global parameter associated with the protocol to be configured; and
S2: acquiring an orchestration parameter, which at least includes acquiring a primary parameter which is a representative parameter directed to the overall network structure and subjected to simplification processing.

In some embodiments, the storage medium is further configured to store a computer program for executing the following step:
S1: acquiring an advanced parameter which is a parameter acquired by orchestrating the primary parameter.

In some embodiments, the storage medium is further configured to store a computer program for executing the following step:
S1: acquiring a pool parameter which is configured to define an allocation range of a parameter value.

In some embodiments, the storage medium is further configured to store a computer program for executing the following steps:
S1: acquiring a protocol relation chain which is configured to describe a dependency relation for each of a plurality of protocols to be configured on a network;
S2: acquiring a pool parameter relation chain which is configured to describe a dependency relation for each of pool parameters to be used on the network; and
S3: acquiring a dependency relation between the protocol relation chain and the pool parameter relation chain, so that the pool parameter relation chain is configured to allocate values for parameters in the protocol relation chain.

In some embodiments, the storage medium is further configured to store a computer program for executing the following step:
S1: establishing a match relation according to the acquired dependency relation chain, the match relation including a plurality of orchestration items, and a type, an orchestration template and a dependency relation corresponding to each orchestration item.

In some embodiments, the storage medium is further configured to store a computer program for executing the following step:
S1: acquiring a neighbor relation among devices in a network, the neighbor relation at least including device information at a port of each of the devices and information relating to the port that is connected.

In some embodiments, the storage medium is further configured to store a computer program for executing the following steps:
S1: selecting a device to be orchestrated from a network topology;
S2: reading a neighbor relation of the device to be orchestrated;
S3: traversing all neighbor devices according to the neighbor relation and performing a port connection orchestration for the device to be orchestrated and the neighbor devices traversed each time respectively; and
S4: judging whether there is a device that has not been orchestrated in the network topology, if so, returning to S1, and if not, generating the network configuration information.

In some embodiments, the storage medium is further configured to store a computer program for executing the following steps:
S1: traversing all protocols on the protocol relation chain from an initial protocol on the protocol relation chain; and
S2: performing for each protocol, the port connection orchestration for the device to be orchestrated and the neighbor devices traversed each time according to an orchestration template corresponding to a current protocol until all protocols are orchestrated.

In some embodiments, the storage medium is further configured to store a computer program for executing the following steps:
S1: parsing the current protocol according to the orchestration template corresponding to the current protocol to obtain a parsed field; and
S2: determining a value of the pool parameter corresponding to the parsed field from an allocation range defined by the pool parameter, and replacing a value of the global parameter corresponding to the parsed field with a predefined value of the global parameter.

In some embodiments, the storage medium is further configured to store a computer program for executing the following steps:
S1: parsing the network configuration information into a message recognizable by the device according to a requirement of a sending channel; and
S2: sending the recognizable message obtained through parsing to the device.

In some embodiments, the storage medium is further configured to store a computer program for executing the following step:
S1: detecting processes of network protocol orchestration, parsing network configuration information and sending network configuration information, and generating a detection log.

In some embodiments, the above storage medium may include, but are not limited to, various medium that can store computer programs, such as U disk, Read-Only Memory (ROM), Random Access Memory (RAM), mobile hard disk, magnetic disk or optical disk, etc.

### Embodiment four

According to an embodiment of the present disclosure, an electronic device is further provided, which includes a memory that stores a computer program, and a processor configured to run the computer program to execute the steps in any of the above method embodiments.

In some embodiments, the electronic device may further include a transmission device connected with the processor and an input/output device connected with the processor.

In some embodiments, the processor may be configured to execute the following steps through a computer program:
S1: acquiring a network orchestration parameter, a dependency relation chain and a network topology, each protocol node in the dependency relation chain being preconfigured with a corresponding orchestration template configured to describe parameter information on which each protocol node depends;
S2: performing a network protocol orchestration according to the network orchestration parameter, the dependency relation chain and the network topology to generate network configuration information; and
S3: sending the network configuration information to a device.

In some embodiments, the processor may further be configured to execute the following steps through a computer program:
S1: acquiring a protocol parameter which at least includes a protocol to be configured on a network, and a configuration parameter and a global parameter associated with the protocol to be configured; and
S2: acquiring an orchestration parameter which at least includes acquiring a primary parameter which is a representative parameter directed to the overall network structure and subjected to simplification processing.

In some embodiments, the processor may further be configured to execute the following step through a computer program:
S1: acquiring an advanced parameter which is a parameter acquired by orchestrating the primary parameter.

In some embodiments, the processor may further be configured to execute the following step through a computer program:
S1: acquiring a pool parameter which is configured to define an allocation range of a parameter value.

In some embodiments, the processor may further be configured to execute the following steps through a computer program:
S1: acquiring a protocol relation chain which is configured to describe a dependency relation for each of a plurality of protocols to be configured on a network;
S2: acquiring a pool parameter relation chain which is configured to describe a dependency relation for each of pool parameters to be used on the network; and
S3: acquiring a dependency relation between the protocol relation chain and the pool parameter relation chain, so that the pool parameter relation chain is configured to allocate values for parameters in the protocol relation chain.

In some embodiments, the above processor may further be configured to execute the following step through a computer program:
S1: establishing a match relation according to the acquired dependency relation chain, the match relation including a plurality of orchestration items, and a type, an orchestration template and a dependency relation corresponding to each orchestration item.

In some embodiments, the processor may further be configured to execute the following step through a computer program:
S1: acquiring a neighbor relation among devices in a network, the neighbor relation at least including device information at a port of each of the devices and information relating to the port that is connected.

In some embodiments, the processor may further be configured to execute the following steps through a computer program:
S1: selecting a device to be orchestrated from the network topology;
S2: reading a neighbor relation of the device to be orchestrated;
S3: traversing all neighbor devices according to the neighbor relation and performing a port connection orchestration for the device to be orchestrated and the neighbor devices traversed each time respectively; and
S4: judging whether there is a device that has not been orchestrated in the network topology, if so, returning to S1, and if not, generating the network configuration information.

In some embodiments, the processor may further be configured to execute the following steps through a computer program:
S1: traversing all protocols on the protocol relation chain from an initial protocol on the protocol relation chain; and
S2: performing for each protocol, the port connection orchestration for the device to be orchestrated and the neighbor devices traversed each time according to the orchestration template corresponding to a current protocol until all protocols are orchestrated.

In some embodiments, the processor may further be configured to execute the following steps through a computer program:
S1: parsing the current protocol according to the orchestration template corresponding to the current protocol to obtain a parsed field; and
S2: determining a value of the pool parameter corresponding to the parsed field from an allocation range defined by the pool parameter, and replacing a value of the global parameter corresponding to the parsed field with a predefined value of the global parameter.

In some embodiments, the processor may further be configured to execute the following steps through a computer program:
S1: parsing the network configuration information into a message recognizable by the device according to a requirement of a sending channel; and
S2: sending the recognizable message obtained through parsing to the device.

In some embodiments, the processor may further be configured to execute the following step through a computer program:
S1: detecting processes of network protocol orchestration, parsing network configuration information and sending network configuration information, and generating a detection log.

The specific examples in this embodiment may refer to the examples described in the above embodiments, and this embodiment will not be repeated here.

Obviously, it should be understood by those skilled in the art that the above modules or steps of the present disclosure may be implemented by a general computing device, they can be concentrated on a single computing device or distributed across a network composed of a plurality of computing devices. In some embodiments, they may be implemented by program codes executable by computing devices, so that they may be stored in a storage device and executed by computing devices. In some cases, the steps shown or described may be executed in a different order from that described herein, or they can be made into individual integrated circuit modules, or a plurality of modules or steps among them may be made into a single integrated circuit module. As such, the present disclosure is not limited to any particular combination of hardware and software.

The above are only preferred embodiments of the present disclosure, and is not intended to limit the present disclosure. For those skilled in the art, the present disclosure may be modified and varied. Any modification, equivalent substitution, improvement, etc. made within the principles of the present disclosure shall be included in the protection scope of the present disclosure.

### Industrial practicability

As described above, a network deployment method and apparatus provided by the embodiments of the present disclosure have the following beneficial effects: solving the problems of high operation complexity and low fault tolerance rate of the network deployment mode provided in related technologies, reducing the operation complexity of the network deployment configuration process by establishing the dependency relation chain, and being more conducive to the automatic deployment and rapid delivery of the basic network in large data center.

## Claims

1. A network deployment method, comprising:
acquiring a network orchestration parameter, a dependency relation chain and a network topology, wherein each protocol node in the dependency relation chain is preconfigured with a corresponding orchestration template configured to describe parameter information on which each protocol node depends;
performing a network protocol orchestration according to the network orchestration parameter, the dependency relation chain and the network topology to generate network configuration information; and
sending the network configuration information to a device.

2. The method of claim 1, wherein the acquiring a network orchestration parameter comprises:
acquiring a protocol parameter, wherein the protocol parameter at least comprises: a protocol to be configured on a network, and a configuration parameter and a global parameter associated with the protocol to be configured;
acquiring an orchestration parameter, at least comprising: acquiring a primary parameter, which is a representative parameter directed to an overall network structure and subjected to simplification processing.

3. The method of claim 2, wherein the acquiring an orchestration parameter further comprises:
acquiring an advanced parameter, wherein the advanced parameter is a parameter acquired by orchestrating the primary parameter.

4. The method of claim 3, wherein the acquiring an advanced parameter at least comprises:
acquiring a pool parameter, wherein the pool parameter is configured to define an allocation range of a parameter value.

5. The method of claim 1, wherein the acquiring a dependency relation chain comprises:
acquiring a protocol relation chain, wherein the protocol relation chain is configured to describe a dependency relation for each of a plurality of protocols to be configured on a network;
acquiring a pool parameter relation chain, wherein the pool parameter relation chain is configured to describe a dependency relation for each of pool parameters to be used on the network; and
acquiring a dependency relation between the protocol relation chain and the pool parameter relation chain, so that the pool parameter relation chain is configured to allocate values for parameters in the protocol relation chain.

6. The method of claim 5, wherein the acquiring a dependency relation chain further comprises:
establishing a match relation according to the acquired dependency relation chain, wherein the match relation comprises a plurality of orchestration items, and a type, an orchestration template and a dependency relation corresponding to each orchestration item.

7. The method of claim 1, wherein the acquiring a network topology at least comprises:
acquiring a neighbor relation among devices in a network, wherein the neighbor relation at least comprises device information at a port of each of the devices and information relating to the port that is connected.

8. The method of claim 7, wherein the neighbor relation further comprises:
a network role of each device in the network and neighbor models between neighbor devices.

9. The method of claim 1, wherein the performing a network protocol orchestration according to the network orchestration parameter, the dependency relation chain and the network topology to generate network configuration information comprises:
a selection step of selecting a device to be orchestrated from the network topology;
a reading step of reading a neighbor relation of the device to be orchestrated;
an orchestration step of traversing all neighbor devices according to the neighbor relation and performing a port connection orchestration for the device to be orchestrated and the neighbor devices traversed each time respectively; and
a judging step of judging whether there is a device that has not been orchestrated in the network topology, if so, returning to the selection step, and if not, generating the network configuration information.

10. The method of claim 9, wherein the traversing all neighbor devices according to the neighbor relation and performing a port connection orchestration for the device to be orchestrated and the neighbor devices traversed each time respectively comprises:
traversing all protocols on the protocol relation chain from an initial protocol on the protocol relation chain; and
performing for each protocol, the port connection orchestration for the device to be orchestrated and the neighbor devices traversed each time according to an orchestration template corresponding to a current protocol until all protocols are orchestrated.

11. The method of claim 10, wherein the performing the port connection orchestration for the device to be orchestrated and the neighbor devices traversed each time according to an orchestration template corresponding to a current protocol comprises:
parsing the current protocol according to the orchestration template corresponding to the current protocol to obtain a parsed field; and
determining a value of the pool parameter corresponding to the parsed field from an allocation range defined by the pool parameter, and replacing a value of the global parameter corresponding to the parsed field with a predefined value of the global parameter.

12. The method of claim 1, wherein the sending the network configuration information to a device comprises:
parsing the network configuration information into a message recognizable by the device according to a requirement of a sending channel; and
sending the recognizable message obtained through parsing to the device.

13. The method of claim 12, wherein the sending the network configuration information to a device further comprises:
detecting processes of network protocol orchestration, parsing network configuration information and sending network configuration information, and generating a detection log.

14. A network deployment apparatus, comprising:
a network orchestration module configured to acquire a network orchestration parameter, a dependency relation chain and a network topology, wherein each protocol node in the dependency relation chain is preconfigured with a corresponding orchestration template configured to describe parameter information on which each protocol node depends; and perform a network protocol orchestration according to the network orchestration parameter, the dependency relation chain and the network topology to generate network configuration information; and
a sending module configured to send the network configuration information to a device.

15. The apparatus of claim 14, wherein the network orchestration module comprises:
a first acquisition unit configured to acquire a protocol parameter, wherein the protocol parameter at least comprises: a protocol to be configured on a network, and a configuration parameter and a global parameter associated with the protocol to be configured; and
a second acquisition unit configured to acquire an orchestration parameter, wherein acquiring the orchestration parameter at least comprises: acquiring a primary parameter, which is a representative parameter directed to an overall network structure and subjected to simplification processing.

16. The apparatus of claim 15, wherein the second acquisition unit is further configured to acquire an advanced parameter, wherein the advanced parameter is a parameter acquired by orchestrating the primary parameter.

17. The apparatus of claim 16, wherein the second acquisition unit is further configured to acquire a pool parameter, wherein the pool parameter is configured to define an allocation range of a parameter value.

18. The apparatus of claim 14, wherein the network orchestration module comprises:
a third acquisition unit configured to acquire a protocol relation chain, wherein the protocol relation chain is configured to describe a dependency relation for each of a plurality of protocols to be configured on a network;
a fourth acquisition unit configured to acquire a pool parameter relation chain, wherein the pool parameter relation chain is configured to describe a dependency relation for each of pool parameters to be used on the network; and
a fifth acquisition unit configured to acquire a dependency relation between the protocol relation chain and the pool parameter relation chain, so that the pool parameter relation chain is configured to allocate values for parameters in the protocol relation chain.

19. The apparatus of claim 18, wherein the network orchestration module further comprises:
an establishment unit configured to establish a match relation according to the acquired dependency relation chain, wherein the match relation comprises a plurality of orchestration items, and a type, an orchestration template and a dependency relation corresponding to each orchestration item.

20. The apparatus of claim 14, wherein the network orchestration module comprises:
a sixth acquisition unit configured to acquire a neighbor relation among devices in a network, wherein the neighbor relation at least comprises device information at a port of each of the devices and information relating to the port that is connected.

21. The apparatus of claim 20, wherein the neighbor relation further comprises:
a network role of each device in the network and neighbor models between neighbor devices.

22. The apparatus of claim 14, wherein the network orchestration module comprises:
a selection unit configured to select a device to be orchestrated from the network topology;
a reading unit configured to read a neighbor relation of the device to be orchestrated;
an orchestration unit configured to traverse all neighbor devices according to the neighbor relation and perform a port connection orchestration for the device to be orchestrated and the neighbor devices traversed each time respectively; and
a judgment unit configured to judge whether there is a device that has not been orchestrated in the network topology, if so, return to the selection unit, and if not, generate the network configuration information.

23. The apparatus of claim 22, wherein the orchestration unit comprises:
a traversal subunit configured to traverse all protocols on the protocol relation chain from an initial protocol on the protocol relation chain; and
an orchestration subunit configured to perform for each protocol, the port connection orchestration for the device to be orchestrated and the neighbor devices traversed each time according to an orchestration template corresponding to a current protocol until all protocols are orchestrated.

24. The apparatus of claim 23, wherein the orchestration subunit is configured to parse the current protocol according to the orchestration template corresponding to the current protocol to obtain a parsed field; and determine a value of the pool parameter corresponding to the parsed field from an allocation range defined by the pool parameter and replace a value of the global parameter corresponding to the parsed field with a predefined value of the global parameter.

25. The apparatus of claim 14, wherein the sending module comprises:
a parsing unit configured to parse the network configuration information into a message recognizable by the device according to a requirement of a sending channel; and
a sending unit configured to send the recognizable message obtained through parsing to the device.

26. The apparatus of claim 25, wherein the sending module further comprises:
a detection unit configured to detect processes of network protocol orchestration, parsing network configuration information and sending network configuration information, and generate a detection log.

27. A network deployment device, comprising:
a network orchestration module configured to acquire a network orchestration parameter, a dependency relation chain and a network topology, wherein each protocol node in the dependency relation chain is preconfigured with a corresponding orchestration template configured to describe parameter information on which each protocol node depends; and perform a network protocol orchestration according to the network orchestration parameter, the dependency relation chain and the network topology to generate network configuration information; and
a sending module configured to send the network configuration information to a device.

28. A storage medium storing a computer program which, when executed, causes to carry out the method of any of claims 1 to 13.

29. An electronic device comprising a memory stored with a computer program and a processor configured to execute the computer program to carry out the method of any of claims 1 to 13.
